# EUROPEAN PATENT APPLICATION

(11) **EP 1 939 812 A2**
(43) Date of publication of application: **02.07.2008**
(21) Application number: 08000020.1
(22) Date of filing: 02.01.2008
(51) Int. Cl.: G06T 17/00

(54) **Terminal Try-on simulation system and operating and applying method thereof**

(30) Priority: 29.12.2006 TW 95150056
(71) Applicant: Yang, Cheng-Hsien, Anping Tainan City 708 (TW)
(72) Inventor: Yang, Cheng-Hsien, Anping Tainan City 708 (TW)
(74) Representative: Lang, Johannes

(57) **Abstract**

The present invention relates to the provision of a terminal try-on simulation system and the method thereof, which is used to establish a physical body modelling information and an article modelling information and respectively produce a 3D physical model and a 3D article model. The article modelling information is related with the wearable article. By integrating the 3D physical model and 3D article model, a stereoscopic image of the 3D try-on model can be produced and shown on the display. According to the said the stereoscopic image on the display, the user can judge if the wearable article fit well and assess the actual wearing style; and by virtue of the arrangement and combination of different 3D article models, different effects of the stereoscopic image can be produced.

## Description

### [Technical Field into Which the Invention Falls]

The present invention relates to a terminal try-on simulation system and operating and applying method thereof, which is used to simulate and integrate a 3D physical model and a 3D article model to produce a stereoscopic image. More particularly, the present invention relates to the terminal try-on simulation system that uses a physical body modelling information and an article modelling information or the preset 3D article model to produce the solid body images of the wearable article.

### [Prior Art]

With the technological advance in computer hardware, software and network and so on, many virtual systems have been gradually developed. On the whole, the current virtual systems have been able to present the 3D visual effect and enhance the reality of the virtual things or persons, making the users unable to feel the original regularity in the virtual world, but still they can feel the order in disorder and the experience of being personally on the scene. However, the current virtual systems are mainly applied in the fields of entertainment industry, virtual education and training and design. If the application of such systems can be expanded to such fields as fashion, textile and e-business industries and the interactive operating mode is adopted, they will provide the services that better conform to the customers' needs and requirements. Besides, such simulation systems will be able to more effectively provide the salespersons, product designers and developers with the data on customers' preference and requirements for discussing the design so as to attain the aim of shortening the R&D period. At the same time, they can provide the related industries with a method of increasing the added value of the products, keeping pace with the market trend and maintaining competitive superiority.

Currently, the system used for simulating the try-on of clothes or accessories has been available. It is used to simulate the multi-angle 2D item figure group and the multi-angle 2D body model figure group and display them on the terminal after the overlapping of layers is executed. Then the single-angle 2D image is transmitted to the terminal. According to the users' operation, the system displays the effect of overlapping layers from different angles; and according to the multi-angle 2D overlapped image group, it judges how well the clothes or accessories corresponding to the multi-angle 2D item model fit and matches with each other. However, in simulating and expressing the effect of 3D items through the 2D figure group, it is impossible to view the infinite angles or far and near visual angles of the said model and it is hard to customize the actions of the model or execute the dynamic interactive acts. In addition, with this method, it is impossible to execute complicated ways of overlapping or simulate physical state and change lighting and information on visual angles, which results in the failure to get the overall visual effect to a highly vivid extent.

Therefore, one category of the present invention is to provide a terminal try-on simulation system that integrates a 3D physical model based on body model information and a 3D article model based article model information to produce a stereoscopic image of the 3D try-on model and judges if the wearable article corresponding to the 3D article model in the stereoscopic image fits well.

In addition, the application related to physics processing is also added to the present invention. By combining the physical library and physics processing with this simulation system, it can immediately work out the infinite bump that the CPU couldn't bear in the cloth physical simulation. What's more, it can accomplish the 3D physical model and the 3D article model as well as the dynamic effect of the vivid stacking between them. All these are unimaginable in the past virtual reality and 3D field. Besides, in combination with the concept of Web2.0, it can use community, comment, far-end reappearance and far-end operation and permit the users to produce or modify the article information at near end and so on. Thereby, the practical level of the system can be greatly upgraded. For example, when choosing commodities, the consumers can interact and share with other users to obtain diverse aspects of community opinions and fashion matching suggestions. They can even put forward various opinions on article modification or order information and sent them to the back-end manufacturers, through which they can customize the personalized commodities or provide important opinions for future design of products.

### [Content of the Invention]

As one of the better embodiments of the present invention, the terminal try-on simulation system consists of communication module, storage module, users' interface module, simulation module and display. The communication module is operated by the users and receives the article modeling information, which is related with the wearable article stored in the server. The storage module is used to store a physical body modeling information and an article modeling information. The physical modeling information is related with the body. The users' interface module is coupled to the communication module and used to receive a plurality of operating command. The simulation module is coupled to the storage module and the users' interface module and used to respond to the said instructions. Through the physical modeling information, the simulation module produces the 3D physical model standing for the body; through the article modeling information, it produces the 3D article model standing for the wearable article; and by integrating the 3D physical model and the 3D article model, it produces the 3D try-on model. The display is coupled to the simulation module and used to show a stereoscopic image of the 3D try-on model produced by the simulation module.

As another better embodiment of the present invention, the operating and applying method of the terminal try-on simulation system consists of the following steps: (a) loading the physical modelling information related to the consumers' concerns; (b) set the article searching conditions for the wearable article and search the article; (c) select at least one piece of article modelling information standing for the wearable article; (d) receive and load at least one piece of article modelling information; (e) integrate the physical modelling information and at least one piece of article modelling information into the try-on imaging information; (f) upload the try-on image information to a network space for at least one network user to operate and view at far end and produce the feedback information on assessment; (g) receive and collect the feedback information on assessment from at least one network user to produce the consumption assessment of the wearable article as reference for decision making; and (h) produce and send a piece of article order information.

The advantages and spirits concerning the present invention can be further understood through the following detailed description and the accompanying figures.

### [Executing Ways]

The present invention relates to the provision of a terminal try-on simulation system that simulates the a 3D physical model and a 3D article model respectively through the physical modelling information and article modelling information and integrates the 3D physical model and 3D article model into a stereoscopic image. The article modelling information is related with the wearable article. The users can, according to the stereoscopic image, judge if the wearable article corresponding to the 3D article model in the image fits well or conforms to the personal fancy for style. Besides, the 3D physical model can be integrated with a preset 3D article model into the stereoscopic image. The following will provide a detailed description of the better embodiment to fully illustrate the characteristics, spirits, advantages and executing convenience of the present invention.

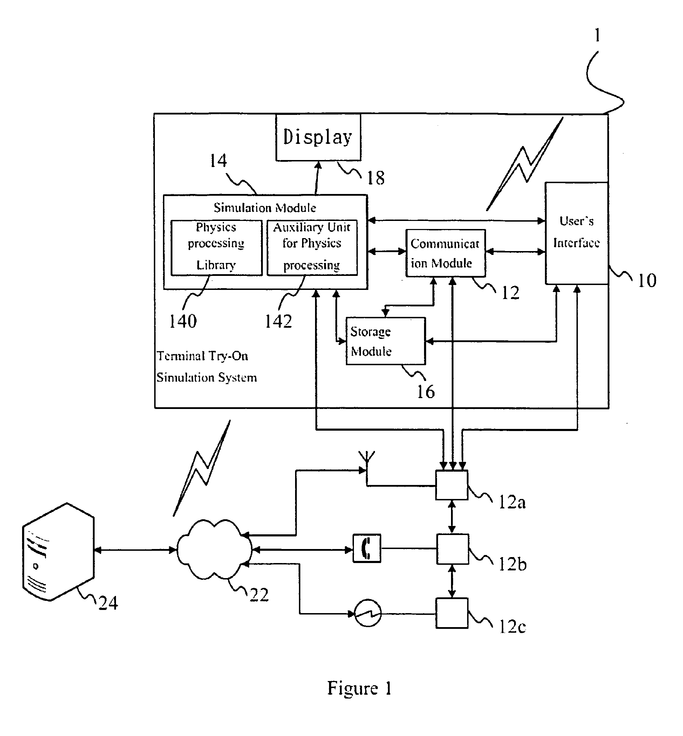

Please refer to Figure 1. Figure 1 represents the schematic diagram drawn according to the terminal try-on simulation system 1, one of the better embodiments of the present invention. As shown in Figure 1, the simulation system consists of the communication module 12, storage module 16, users' interface module 16, simulation module 14 and display 18. This embodiment clearly shows that this terminal try-on simulation system greatly differs from the method of the network try-on website in the past using the browser to browse the fixed 2D images of models and copy the 2D images of commodities. Instead, through a device at the terminal, it downloads the article modelling information and change it into the 3D article model; and meanwhile, it loads the 3D physical model and the 3D article model in the simulation module to simulate the 3D try-on model, which is not the way of displaying 2D images. This terminal try-on simulation system differs from the common 3D game software in that it can directly download the article modelling information on the physical article rather than the 3D virtual game items stored in the game software. The more advanced characteristics lies in that the 3D physical model produced from the physical modelling information doesn't only pre-store the 3D models for the players to select. It can be obviously seen that the present invention can enable the users to quickly and precisely carry out the try-on simulation and simulate the 3D try-on model more vividly. Thereby, it can improve the defect of the former 2D picture overlapping in which plenty of pictures were needed, the models with fixed actions needed to be manually made with the 3D making software and the pictures had to be artificially rendered. With the present invention, the vivid real-time 3D try-on model can be used to greatly expand the application layers. On the other hand, it provides an application field completely different from that of the 3D game software.

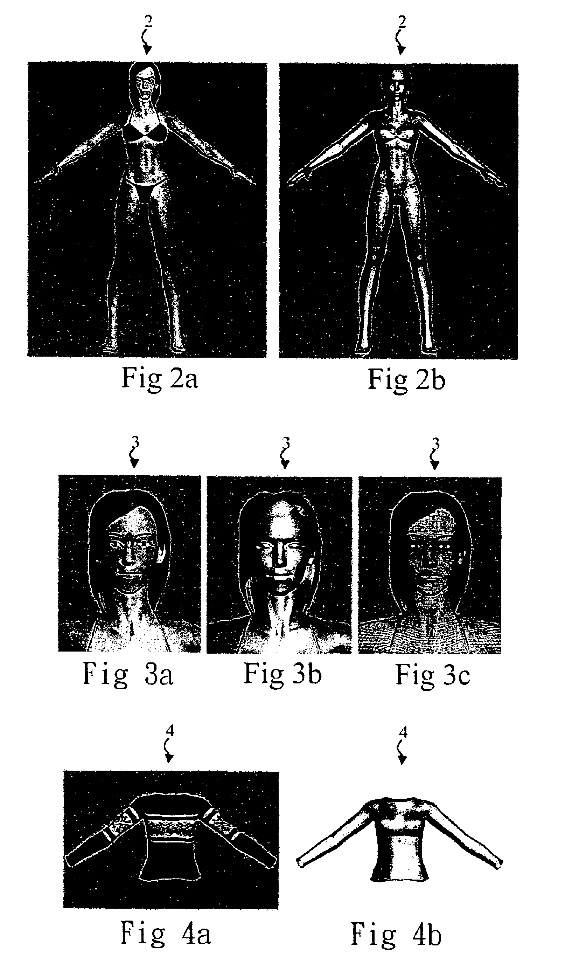

Please refer to Figures 2A and 2B. Figure 2A is the sketch of the simulated human body model 2 while Figure 2B is the 3D outline visual of it. The communication module 12 can be operated by the user to receive a product model information, which is related to the applicable apparal objects that are saved in the server. The communication module 16 can be used to save the body model information and the product model information, which is assigned or input by the user. The body model information is connected to the body, among which the body model information can be input by oneself or by the shop owner or by a hardware such as a body scanner or a 3D scanner, to pre-store the role archive on the internet, which is similar to the online games. The information can also be pre-stored on the user's end. The user's interface module 10 is linked to the communication module 12, and is able to receive plural operation orders. Meanwhile, the orders are related to the control information input by the hardware equipment and the internet. Besides, the orders might not only be the hardware equipment from proximal end such as key board, mouse, action catcher or facial expression catcher, but also can be the remote orders from the internet, so as to achieve the control of the simulation system.

As shown in the Figure 1, the communication module 12 can be connected to the server 24 via an external network. The communication module 12 may contain a wireless telecom module 12a, a public exchange telephone module 12b and a networking module 12c, etc. By means of the communication equipment above, the user doesn't need to directly operate the interface module 10, instead, the user can input the order from a distance. The wireless telecom module 12a can be connected to a wireless telecom network; the public exchange telephone module 12b can be connceted to a public exchange telephone network; the networking module 12c can be connected to an area network, an internal enterprise network and an international network.

Please refer to Figures 3A and 3C. Figure 3A is the sketch of the simulated human face model 3 while Figure 3B is the 3D outline visual and Figure 3C is the 3D outline sketch of it. The body model information consists of the information calculated by the computer that is related to the body itself, the skeleton and the body features. The terminal apparal simulation system generates the features of a body structure and curved face of its outline through the human gene information, combining its skeleton information and body features to achieve the simulated 3D apparal style immediately.

Implemented in a concrete example, the human gene information can be obtained from the images of the body according to algorithm, or from a body scanning equipment/3D scanner, or from the user's input/choice.

In a word, the human gene information can be: a stature, a headform, a hairdo, the curve of four limbs, the curve of human body, the curve of bosom, the curve of circumference, the curve of waistline, the curve of hip circumference, the width of four limbs, the height of the shoulders, the width of the shoulders, the height of the elbow, the upright sitting height, the common sitting height, the distance between two elbows, the width of the hip, the thickness of the legs, the height of the knee, the distance between the hip and the ankle, the distance between the hip and the knee, the distance between the hip and the tiptoe, the length of an upright arm, the length of a lateral arm, the length of a stretched arm, the curve of the face, the height of the eyes, the curve of the eyepit, the distance between two eyes, the curve of the eyebrows, the distance between eyebrows, the curve of the nose, the curve of the mouth, the curve of the lips, the curve of the ears or the curve of the cheek. In the field of Human Genome Engineering Science, human gene information contains the curved face of all the details of human body, outline, the descriptions and records of the relative value and the absolute value, the body structure and its action features, etc. It's even related to the flexible information such as the muscles and the fat. However, the description of human body simulation is always difficult to be listed in the infinite related values. But through sufficient basic simulation mode, and the information that represents human features and curves and outline, it's workable to put a real body simulation in this terminal apparal simulation system to generate a 3D physical model and a 3D product model for further simulation and control. Besides, you can add in flexible information, and contract 3D product model objects on the 3D physical model to achieve a better visual effect of simulation which is similar to dressing up and showing the skin.

Please refer to Figure 1 again, the simulation module 14 is linked to storage module 16 and user interface module 10. The simulation module 14 can be used to react to operation orders, to generate the 3D physical model based on the body model information, to generate the 3D product model that represents the applicable apparal objects based on product model information and to produce a 3D apparal model by integrating the 3D physical model and the 3D product model. Please refer to Figures 4a and 4B. Figure 4A is the sketch of the 3D product model 4 while Figure 4B is the 3D outline of it.

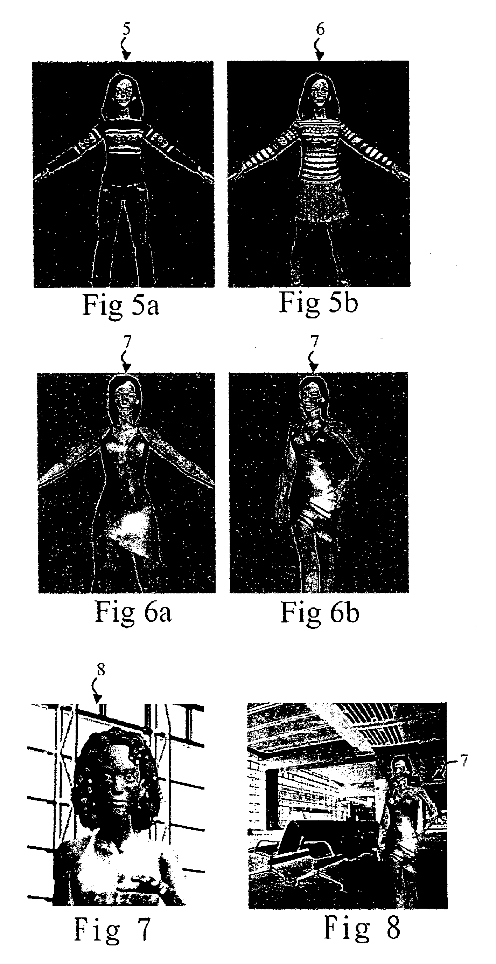

Please refer to Figures 5A and 5B. Figure 5A is the 3D apparal model sketch of human body simulation model 5, while Figure 5B is the sketch of the integrated 3D apparal model 6. For example, the simulation module 14 contains a physical formula database 140 and a physical calculation assistance unit 142, which are used to calculate the 3D physical model and the 3D product model and the physical simulation stack mode between them, so as to simulate an instant simulated 3D apparal mode. Therefore, the complex physical activity can be worked out, so the simulation physical effect that the outfits fit perfectly on the roles is achieved. The monitor 18 is linked to simulation module 14, which can be used to show the 3D image of apparal mode that is generated by simulation module 14.

For example, the physical calculation assistance unit 142 has a plural physical order set, which is used to enhance the function of its related physical calculation. Being similar to adding MMX into CPU to accelerate the speed and SSE, SSE2, and 3Dnow!3D of AMD to fasten the process of 3D visuals treatment done by Intel in early times, this physical order set is also installed in CPU or GPU or PPU to enhance the function of physical calculation dramatically.

Furthermore, the physical calculation assistance unit 142 can be a physical calculation unit, a display calculation unit or a CPU. Thus, it can be applied to video games to achieve vivid physical simulation effect, such as the calculation of the dynamics of soft and solid objects, general collision sense, limited element analysis, the dynamics of the fluid, hair simulation and cloth simulation, etc.

Hereby is to emphasize that when implemented in a concrete case, the operation order might contain an action order information. The action order information can be used to drive the 3D physical model to generate a series of instant dynamic actions, such as turning around, walking, stooping, etc, so that the user can observe how the 3D object model in the 3D image behaves under different actions and from different angles. The action information can be a pre-set action order or demonstrated by using an action catcher. The user can place the action catcher on its body, facing 2D monitor or 3D monitor to conduct different actions. Please refer to Figures 6A and 6B. Figure 6A is the sketch of a pose set up by the 3D apparal model 7, while Figure 6B demonstrates another pose of it. Figure 6A only shows the simple stack of clothes which doesn't involve any physical calculations, while Figure 6B is the result calculated by the physical calculation assistance unit 142.

Therefore, the physical calculation formula database 140 and the physical calculation assistance unit 142 can instantly calculate the 3D physical model and the 3D product model and their physical relations, so as to generate an instant 3D simulated apparal mode.

The simulation module 14 can produce integrated information based on body model information and product model information, or the 3D physical model and 3D product model. Through this, the user is able to decide whether the product fits or not quickly.

The body feature can be: the material information, the luster of the skin, the color of the skin, a tattoo, a birthmark, the lines of the skin, the winkles on the skin, the position of the hair, the mode of the hair, the color of the eyes or a makeup mode. The body feature can be obtained from the image that's at least one frame related to the body itself.

Besides, the operation order can contain the skin makeup information that is related to the body makeup. The simulation module 14 produces a makeup layer, which can be stuck onto the 3D physical model. Please refer to Figure 7, which is the sketch of another simulated human face model 8. Blusher, eyeshadow, lipsticks can be put onto the surface of model 8 by means of multi-layer photos.

The 3D apparal model is stuck with at least one material photo, in order to present the vivid mode of 3D apparal model. Meanwhile, the material photo can be generated by multi-material photo, mirror image photo, face lift photo, material timing, special environment material photo, light source treatment photo, special program material photo, transparent photo, concavo-convex photo, normal photo, wave photo, environmental color photo, color proliferation photo, mirror reflection photo, luster photo, self-illumination photo, transparent passage photo, reflection photo, refraction photo, peak color photo or the combination of these photos. In this way, the simulated material effect and the outlook mode of the 3D product model and 3D physical model can be produced, and through the multi-layer actions, the visual effect of simulation can be further strengthened.

In a concrete case, the applicable apparal object can be: an outfit, a hat, a pair of shoes, a watch, a ring, a bracelet, a necklace, a neck ring, a toe ring, a feet chain, a pair of glasses, a strap, a waistband, a pair of gloves, fake nails, a wig, a suit of underwear, a bra, a breast mask, a bathing suit, a facial mask, a fanon, a bag, a handbag, a backpack, a scarf, a silk scarf, an accessory, an ornament, a wearable accessory, a pair of earrings or a pet outfit. It includes all the wearable products that are applicable on human bodies, from basic outfits, skirts, trousers, shoes and hats, to accessories, jewelries, watches and luxury handbags, even pets like cats and dogs, and therefore, the category of wearable products is extended to pet's outfit, accessories and all kinds of chic beauty products.

The product model information consists of material curve/curved face information, material physical information, material structure information, material combination information and material/photo information, which is used to describe and form the shape, appearance, structure and the physical action mode of the 3D product model. Also, the product model information can be: material photo information, shape information, material combination information, tailor information, the physical characteristics of soft objects, the softness of the material, the ductibility of the material, the quality feeling of the material, the friction force of the material, the thickness of the material, the structure elasticity, the hardness of the material, the knitting structure, the category of the yam, the physical characteristics of rigid objects or a structural component. By means of the information above, the 3D product that can be calculated and operated by the physical calculation formula database and physical calculation assistance unit is generated, so as to react to the physical characteristics and the self structure/interactive distortion/combination of the 3D product model and other 3D product models or the interaction with 3D physical model.

The product model information contains at least one apparal method. The simulation module 14 can take advantage of this method to integrate the 3D physical model and 3D product model, in order to form an instant simulated 3D apparal style. The apparal style can be presented from different angles, positions, multi-layers, combined structure of the wearable objects.

Also, the operation order may contain an apparal exchange order, then the simulation module 14 will operate another apparal method according to the exchange order, so that another apparal style comes into being. The module 14 can immediately obtain the apparal information among different product models or other control orders to assign different apparal styles, change the apparal mode and the stack/combination relations among multi 3 D product models and the positions and angles of 3D products on 3D bodies rapidly. Through changing apparal methods, all kinds of wearable products can be combined to demonstrate the simulated effect which complies with the real situations. Say, when the shirt is put in the trousers neatly, together with a suitable tie to go long with the shirt, it shows a person's high spirit; or when the shirt is outside the trousers and the tie is halfly tied, it shows a person's depravation style. Besides, there're many ways to wear scarves, watched and accessories. The apparal method information cannot only assign a mono 3D product model apparal mode, but also can assign different 3D product model to overlap, combine and stack, so as to enable the user to get a more accurate instant 3D apparal mode and the multiple dressing styles. With the changing apparal method, it complies with the living habit of many consumers better that when they go shopping, they enjoy trying on different outfits.

The communication module 12 can upload and download the body model information. The product model information and the operation order can be sent to the remote terminal apparal simulation system (not shown in picture 1), and reconstruct the 3D apparal model and the instant simulated 3D apparal mode.

The communication module 12 can receive the scene information. The simulation module 14 reacts to the operation order, and based on the information to generate a simulated scene, then by integrating the 3D physical model and 3D product model to form the apparal style demonstration in this simulated scene. Please refer to Figure 8, which is the sketch of the 3D apparal model 7 in Figure 6B in a simulated scene. In this way, it forms an extended personalized exhibition.

In all, the scene information can be space information, lighting information, atmosphere information, sound information, special effect information, climate information, visual angle information, furniture information or ornament information. And the background scene serves as an extension of the wearable products combination, by loading the scene information, an apparal style demonstration is formed, presenting an instant simulated 3D apparal mode in all kinds of scenes and spectacles in real life. Say, the visual effect of attending a banquet, meanwhile, using remote terminal to re-construct the 3D apparal model and instant 3D apparal mode, so as to achieve the different fashion styles of different users, such as lovers' paired outfit or couple's paired outfit.

From a typical application of the virtual system, it contains one rendering tool, which can render the outcome of try-dressing style in the virtual scene or a real-time 3D try-dressing style in one image for one order, so that all elements related to the virtual scene can be rendered to a 2D/3D try-dressing image. In conclusion, the virtual system can then output a 2D photo similar to a camera photo or extend application of 3D showing.

From a typical application of the terminal try-dressing virtual system, it further contains one tool for design and modification on near-end goods modeling information (not showing in the graph). This tool can unfold detailed data and attribute value of the goods modeling information then carry out design modification and finally generate information of the goods modification requirements. Besides, from the application, information of the goods modification requirements can be various, such as a piece of lofting information, a piece of curve modification information, a piece of fittings replacing information, a piece of raw material change information, a piece of design style change information, a piece of pattern change information, a piece of text change information, a piece of enclosed drawing change information, a piece of length change information, a piece of width change information, a piece of elasticity change information, a piece of thickness change information, a piece of liner change information, a piece of seam change information, a piece of gauffer change information, a piece of size change information, a piece of color-matching change information or a piece of coloration information.

From a typical application of the terminal try-dressing virtual system, it further contains a large-scaled host computer for multi-people online services, which can create a virtual network space for multiple users in one 3D virtual space and in which these users can interact with each other, even talk to each other. In such a way, the current multi-people online game becomes a sort of network service platform for the people to share their information and make friends. Further more, from such platform, users can not only talk to other users in a far place via words or voices, but also see various 3D try-dressing images of those users, even to see their online wardrobes. By all of which, it is possible to have a look at people's various try-dressing images. In conclusion, the virtual system combines different functions of playing games, sharing experiences, making friends and interacting with different people.

In addition, please refer to referential graph 9, which is the flowchart of the operation and application methods of the terminal try-dressing virtual system according to a said good application example. As it is shown in graph. 9, the operation and application methods of the terminal try-dressing virtual system contain the following steps:
First of all, carry out step S 10 to load information that represents one kind of body modeling concerned by customers.
Secondly, carry out step S 12 to set up a research term on wearing goods and start researching.
Thirdly, carry out step S 14 to select at least one piece of wearing goods modeling information of found goods.
Fifthly, carry out step S16 to receive and load the above-mentioned selected goods modeling information.
Sixthly, carry out step S18 to combine the body modeling information to the one piece of goods modeling information till a try-dressing image is shown up.
Seventhly, carry out step S20 to upload the finished try-dressing image to one network space for at least one network user to review and response with one piece of feedback information from a faraway terminal.
Eighthly, carry out step S22 to receive and collect feedback form at least one network user so that references for consuming evaluation and decision of this wearing goods can be generated.
Finally, carry out step S24 to generate and send goods ordering information.

From a typical application of the terminal try-dressing virtual system, the feedbacks can be various , such as scores, a piece of comment, a piece of suggestion, a piece of tie-in suggestion, a piece of scene suggestion, a piece of dressing style suggestion, a piece of occasion suggestion, a piece of research terms suggestion, a piece of goods brand suggestion, a piece of goods design change information, a piece of goods replacing suggestion, a piece of color-matching suggestion, a piece of material suggestion, a piece of goods modification suggestion, a piece of goods ordering suggestion, a piece of lofting information, a piece of words attachment information, a piece of image attachment information, a piece of makeup suggestion or a piece of hair style suggestion. From all above-mentioned feed-backs, consumers can receive a measurable fairly scores, or comments in text or various suggestions. In addition, consumers can perform another try-dressing in the shortest time. Therefore, it is possible for customers to response to all feedbacks and re-try-dressing upon the feedbacks and then receives new feedbacks in a shortest time. Also, suggestions on goods can be from customer service staffs from remote network terminal. For example, customers can order some goods based on suggestions provided by network service staffs or friends online. Customers buy goods that match their current holdings that are try-dressing goods kept in wardrobe or some try-dressing goods or goods they planned to buy. In such case, customers no need to take their holdings to a real shop for try-dressing but can find out a real-time dressing image via virtual model, so that they can make their ordering decisions more quickly and conveniently.

From a typical application of the terminal try-dressing virtual system, the network space can be a servo, a web page space, a blank space, a web bbs space, a information exchange servo, a data base servo, a file servo, a spot-to-spot servo, a instant information software, a spot-to-sport exchange software, a multi-media servo, a multi-media crossfire exchange software, a virtual network space, a network gaming space, a 3D virtual network space, a 3D virtual online shop, a video sharing space, a network information receiving software or a network customer service system. For example, customers can send messages via network instant message system to the terminal try-dressing virtual system used by others and start remodeling. When other users get permission, they can help customers to select various wearing goods, they can also give scores or suggestions on current 3D try-dressing styles. Therefore, fashion experts and customer service staffs can recommend suitable goods to customers in a short time can simulate try-dressing images.

From a typical application of the terminal try-dressing virtual system, the try-dressing finished image can be a real-time virtual 3D wearing style, a dynamic and real-time virtual 3D wearing style, a instant virtual 3D wearing style or a try-dressing style showing up.

From a typical application of the terminal try-dressing virtual system, goods ordering information contains goods build-to-order information to meet customers' particular requirements on goods fitness or change. expectations or special making requirements. Also, the goods build-to-order information can be a fitness size, a body size, a piece of body shape information, a piece of lofting information, a piece of lay-making information, a piece of fittings information, a piece of matching goods information, a piece of design change requirements information, a piece of material change information, a piece of seam style information, a piece of color-matching information, a piece of coloring information, a piece of pre-washing information, a piece of words attachment information or a piece of image attachment information. In the application, customers raise ideas at near-end of changing style and size, replacing accessories such as metal buttons or leather fittings, even lofting and lay-making information of the wearing goods related to textile manufacturing procedures upon customers body-shape information so that customers can provide to manufacturers to order special goods. In such a way, the conventional ways of customers going to the real shop for manual measuring or explaining in details to shop staffs is changed.

From a typical application of the terminal try-dressing virtual system, the operation and application methods can further carry out identity recognition so that customers can logon upon their identities and store their own body information for modeling. Besides, the application can further carry out identity authorization, grouping and filtering functions, so that customers can define certain network users who are permitted after recognized by the identity tool to see try-dressing images uploaded by the authorized customers, or customers can also make more precisely or weight the contents and ranges of feedbacks. For example, customers can load other family members' pre-built body modeling information and select gods for them.

From a typical application of the terminal try-dressing virtual system, the operation and application methods can further carry out one far-end control program so that the customers can receive far-end operation commands sent by the network users specially authorized and passed identity recognition, then control the running of try-dressing virtual system at the customers' side directly and timely at far end.

In addition, from a typical application of the terminal try-dressing virtual system, the goods research terms may contain a quick research term so that customers can quickly search for at least one piece of wanted wearing goods modeling information. Also, the goods quick research term in the application can be various, such as a piece of goods selection and temporary storage information, a piece of shopping basket information, a piece of purchasing at next time information, a piece of ordered goods information, a piece of virtual wardrobe information, a piece of 3D virtual goods information, a piece of 3D virtual online shop exhibition shelf information, a piece of 3D virtual online shop showing window, a piece of servo auto recommended goods information, a piece of expert-recommended goods information, a piece of far-end customer service staffs recommended goods information, a piece of other network users recommended goods information, a piece of evaluation response recommended goods information, a piece of fitness goods recommended goods information, a piece of preferential purchasing group information or a piece of pre-grouped wearing goods information. Quick research terms are used for customers on quick selection and try-dressing to see fitness of different wearing goods. For example, goods that customers have bought or planned to buy or favorite brands or concerned goods can be tried of matching status quickly. In real life, customers can only image how the goods they chosen match the clothes they kept in their wardrobes. It is impossible for them to bring every clothes to the shop and try one by one to see the matching status. However, such difficulties can be improved by quick research terms which can make clothes in family wardrobes related to goods 3 D models in virtual wardrobes. Therefore, it is the same as bringing all real clothes in family wardrobes to the shop o try matching status, and customers are served by a quick and convenient virtual shopping model. In addition, it can avoid for customers taking goods with unsuitable colors, styles or made of odd materials.

In addition, from a typical application of the terminal try-dressing virtual system, goods search terms can perform functions of recommendation and ordering, which carries out commercial wisdom analysis or cross comparisons according to customers' interests and search records. Also, such functions in the application may be various, such as goods with favorite brand, material and colors, goods with similar series styles, goods in special styles and fitness, goods with features similar to research terms, seasonally favorite goods, goods recommended by other network users, goods in pairs with others bought by other customers, goods in pairs recommended by other network users, goods with ethnic styles or designs. In the real market of wearing goods in real life, most goods have no certain names to be defined of which style from which series in which season with which brand. Therefore, the real market purchasing is too different from that by e-cominercial operation by which customers just simply input goods name and type (such as LCD TV type, book with names or ISBN) and they can quickly and easily find out the wanted goods with clear specs. In searching for wearing goods, the searching method in a combination of commercial wisdom and cross comparisons is absolutely necessary and unavailable at present. For example, search terms can be gradually limited on favorite brand, materials, seasonal styles etc or arranged in orders, so that customers can find their suitable goods for matching with other clothes; or it is possible to search for more precise information such as skirts or pants matching a style-defined coat by color matching, customers' recommendation or goods in similar style.

In addition, from a typical application of the terminal try-dressing virtual system, the operation and application methods can further carry out goods presentations according to dynamic show, namely, re-show the pre-recorded dynamic shows in the try-dressing virtual system. Also, in such application, the dynamic show can contain at least a script language program, a piece of goods modeling information, a piece of action command information, and a piece of scene information. The application can use dynamic shows such as some action information that a brand hires models to make an advertisement, while users only need to download a piece of show and can enjoy part of a fashion show. Also, the system can replace the model's 3D physical model with another assigned 3D physical model for a quick reviewing on brand fashion shows in this season.

From all above-mentioned examples with good details, the application of this terminal try-dressing virtual system is clearly expressed. The system can generate and combine one 3D physical model to one 3D goods model become a 3D image by its virtual modules. Then the generated 3D image can be used for judging whether the goods represents by the 3D model fits well or not. Besides, the terminal try-dressing virtual system can meet particular individual purposes by modifying the face features of 3D physical model upon user's interests.

From all above-mentioned examples with good details, the author hopes to make the features and concepts of this invention more clearly, yet not to outline a limited range of this invention. In contrast, the author wants to make this invention cover a full range of various changes and similar arrangement of the applied patent.

### [Figures Simple Specifications]

Figure 1 is the sketch map of a said good application example of the terminal try-dressing virtual system.
Figure 2A is the sketch map of one real-body virtual model.
Figure 2B is the 3D outline of the real-body virtual model.
Figure 3A is the sketch map of one real-face virtual model.
Figure 3B is the 3D outline of the real-face virtual model.
Figure 3C is the 3D outline of the real-face virtual model.
Figure 4A is the sketch map of one 3D goods virtual model.
Figure 4B is the 3D outline of the 3D goods virtual model.
Figure 5A is the sketch map of the 3D try-dressing models of one of the real-body virtual models.
Figure 5B is the sketch map to combine the real-body model to another 3D try-dressing virtual model.
Figure 6A is the sketch map of one 3D try-dressing model in another gesture.
Figure 6B is the sketch map of the 3D try-dressing model in another gesture.
Figure 7 is the sketch map of another real-face virtual model.
Figure 8 is the sketch map of 3D try-dressing model from graph6B in one virtual scene.

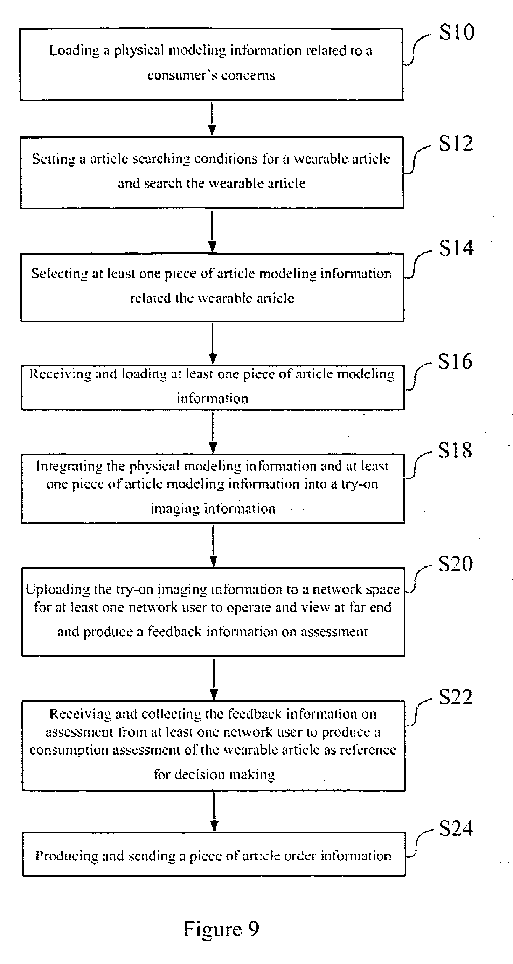

Figure 9 is the flowchart of the operation and application methods of the terminal try-dressing virtual system.

### [Specifications on Major Component Symbols]

1: Terminal Try-dressing Virtual System
10: User Interface Module
12: Communication Module
12a: Wireless Telecommunication Module
12b: Public Telephone Exchange Module
12c: Networking Module
14: Virtual Module
140: Physical Arithmetic Functions Library
142: Physical Arithmetic Assist Unit
16: Storage Module
18: Display
22: External Network
24: Servo
2, 7: Real-body Virtual Model
3: Real-face Virtual Model
4: 3D Goods Model
5, 6: 3 D Try-dressing Model
8: Another Real-face Virtual Model
S10-S24: Procedure Steps

## Claims

1. A terminal try-on simulation system, comprising:
a communication module, which is operated by a user and receives an article modelling information that is related with a wearable article stored in a server;
a storage module, which is used to store a physical body modelling information and an article modelling information designated and input by the user; and the physical modelling information is related with the body;
a user's interface module, which is coupled to the communication module to receive a plurality of operating command that are related with a control information witch input by a hardware device/network ;
a simulation module, which is coupled to the storage module and the user's interface module and used to respond to the operating command, wherein through the physical modelling information, it produces a 3D physical model standing for the body; through the article modelling information, it produces a 3D article model standing for a wearable article; and by integrating the 3D physical model and the 3 D article model, it produces a 3D try-on model; and
a display, which is coupled to the simulation module and used to show a stereoscopic image of the 3D try-on model produced by the simulation module.

2. The terminal try-on simulation system of claim 1, the simulation module comprising a physics processing library and an auxiliary unit for physics processing, which are used to simultaneously calculate the 3D body-based model and the 3D article model and a physical simulation stacking pattern between the two models and then simulate a real-time vivid 3D try-on pattern.

3. The terminal try-on simulation system of claim 2, the auxiliary unit for physics processing contains a plurality of physical instruction sets that are used to upgrade the efficiency of the said unit in the related physics processing.

4. The terminal try-on simulation system of claim 2, the auxiliary unit for physics processing is selected from the group consisting of a physics processing unit, a graphic processing unit and a central processing unit.

5. The terminal try-on simulation system of claim 2, the operating command comprising an action command information. The action command information is used to drive the 3D physical model to produce a series of real-time dynamic actions; through the physics processing library and the auxiliary unit for physics processing, it simultaneously calculates the 3D physical model and the 3D article model and the physical linking relationship between the two models and then produces a dynamic real-time vivid 3D try-on pattern.

6. The terminal try-on simulation system of claim 2, the simulation module produces a fitting information according to the physical body modelling information and the article modelling information or according to the 3D physical model and the 3D article model.

7. The terminal try-on simulation system of claim 2, the physical modelling information comprising an ergonomic measurement information, a body framework information and a body appearance imaging characteristic information. Through the ergonomic measurement information, the terminal try-on simulation system produces a body structure and contour surface containing the ergonomic attributes; and by using the body framework information to drive actions and through the body appearance imaging characteristics, it then produces the complete real-time vivid 3 D try-on pattern.

8. The terminal try-on simulation system of claim 7, the ergonomic measurement information is obtained from at least two frames of body-related images according to an algorithm or by scanning the body with a body scanning device/3D scanner, or established by the user's input/selection.

9. The terminal try-on simulation system of claim 7, the body appearance imaging characteristic information is selected from the group consisting of a material map information, a skin luster information, a skin color information, a tattoo information, a birthmark information, a skin lines information, a skin wrinkles information, a hair position information, a hair appearance pattern information, an eyes' color information and a makeup style information.

10. The terminal try-on simulation system of claim 2, the operating command comprising a skin makeup information related to body makeup. The skin makeup information produces a makeup layer through the simulation module and this layer is pasted on the 3D physical model.

11. The terminal try-on simulation system of claim 2, the wearable article is selected from the group consisting of a clothe, a cap, a pair of shoes, a wristwatch, a bracelet, a necklace, a choker, an anklet, an ankle lace, a spectacles, a belt, a waistband, a pair of gloves, an artificial cosmetic nail, a wig, an underwear, a bra, a corset, a swimwear, a mask, a shawl, a bag, a handbag, a backpack, a scarf, a silk scarf, a clothing accessories, a ornaments, a wearable ornament, a earrings, and a pet clothing.

12. The terminal try-on simulation system of claim 11, the article modeling information is selected from the group consisting of a shape data, a structural elasticity information, a fabric thickness information, a fabric hardness information, a knitting texture information, a yarn variety information, a physical property of rigid items, and a structural component information.

13. The terminal try-on simulation system of claim 2, the article modeling information which related to the wearable article consisting essentially of a material curve/surface information, a material physical information, a material structure information, a material combination information and a texture/map information. It is used to describe and form the shape, appearance, structure and physical motion mode of the 3D article model.

14. The terminal try-on simulation system of claim 2, the article modeling information comprising a wearing method information. The simulation module, by virtue of the wearing method information, integrates the 3D physical model and the 3D article model to produce the wearing style of the real-time vivid 3D try-on pattern.

15. The terminal try-on simulation system of claim 14, the operating command comprising a wearing method modify information, according to operating the wearing method modify information, the simulation module operates the wearing method and changes it into another wearing style.

16. The terminal try-on simulation system of claim 2, the communication module uploads and downloads the physical modelling information, the article modelling information and the operating command to another far-end terminal try-on simulation system on which it further reconstruct the real-time vivid 3D try-on pattern.

17. The terminal try-on simulation system of claim 2, the communication module receives a scene information and respond to the operating command. Based on the scene information, it produces a virtual scene and by integrating the 3D physical model and the 3D article model with the virtual scene, it forms the demonstration of a try-on style in the virtual scene.

18. The terminal try-on simulation system of claim 17, the scene information is selected from the group consisting of a space information, a lighting information, an atmosphere information, a sound information, a special effect information, a climate information, a visual angle, a furniture information, and a furnishings information.

19. The terminal try-on simulation system of claim 17, the simulation system comprising a render, which renders the try-on style demonstration or the single vivid 3D try-on pattern in the virtual scene and then renders all the related items thereof into the 2D/3D try-on rendering images.

20. The terminal try-on simulation system of claim 2, it further comprising a design modifier of near-end article modelling information. The design modifier of near-end article modelling information is used to open up the detailed data and attribute value of the article modelling information and modify the design, thus producing a article modification information.

21. The terminal try-on simulation system of claim 20, the article modification information is selected from the group consisting of a grading information, a curve modification information, an accessory replacing information, a material texture changing information, a design pattern changing information, a pattern changing information, an attached word changing information, an attached drawing changing information, a length modification information, a width modification information, a elasticity modification information, a thickness modification information, a cushion modification information, a sewing modification information, a fold modification information, a size modification information, a color modification information, and a dyeing and finishing modification information.

22. The terminal try-on simulation system of claim 2, it further comprising a Massively multiplayer online server. The Massively multiplayer online server is used to produce a virtual network space to contain a plurality of users in the 3D virtual space where the users can interact and talk with each other.

23. An operating and applying method of a terminal try-on simulation system, comprising the following steps:
loading a physical modelling information related to a consumer's concerns;
setting article searching conditions for a wearable article and search the wearable article;
selecting at least one piece of article modelling information related the wearable article;
receiving and loading at least one piece of article modelling information;
integrating the physical modelling information and at least one piece of article
modelling information into a try-on imaging information;
uploading the try-on imaging information to a network space for at least one network user to operate and view at far end and produce a feedback information on assessment;
receiving and collecting the feedback information on assessment from at least one network user to produce a consumption assessment of the wearable article as reference for decision making; and
producing and sending a piece of article order information.

24. The operating and applying method of the terminal try-on simulation system of claim 23, the feedback information on assessment is selected groups composed of a score, a comment, an article suggestions, a matching suggestions, a scene suggestions, a suggestions on wearing style, an attending occasion suggestions, a searching condition suggestions, an article brand suggestions, an article design modification information, an article replacing suggestions, a color matching suggestions, a material texture suggestions, an article modification suggestions, an article customization suggestions, an article grading suggestions, an attached word information, an attached image information, a skin makeup suggestions, and a hairstyle suggestions.

25. The operating and applying method of the terminal try-on simulation system of claim 23, the network space is selected groups composed of a server, a web page space, a blog space, a BBS space, an information exchange server, a database server, a file server, a P2P server, a real-time information software, a P2P exchange software, a multimedia server, a multimedia stream exchange software, a virtual network space, a network game space, a virtual 3D network space, a virtual 3D network mall, an image sharing space, a network information receiving software, and a network customer service system.

26. The operating and applying method of the terminal try-on simulation system of claim 23, the try-on imaging information is selected groups composed of a real-time vivid 3D try-on pattern, a dynamic real-time vivid 3D try-on pattern, a real-time vivid 3D try-on pattern with wearing style, and a demonstration of try-on style.

27. The operating and applying method of the terminal try-on simulation system of claim 23, the article order information comprising an article customization information and is used to meet the consumer's requirements for ordering suitable commodities or the requirements for expected modification or individual customization.

28. The operating and applying method of the terminal try-on simulation system of claim 23, the article customization information is selected groups composed of a fitting size information, a body size information, a body information, a grading information, a cloth marking information, an accessory article information, a matching article information, an information on required design modification, a raw material replacing information, a sewing pattern information, a color matching information, a dyeing and finishing information, a pre-washing information, an attached word information, and an attached drawing information.

29. The operating and applying method of the terminal try-on simulation system of claim 23, it further comprising an executes an identity authentication program, enabling the consumers to log on to get or store the physical modeling information according to their identity assertion.

30. The operating and applying method of the terminal try-on simulation system of claim 29, it further comprising an executes the functions of an identity authorization, groups or filtration, enabling the consumer to designate and permit a network user who have passed the authorization required by the identity authentication program to view the try-on imaging information uploaded by the consumer and make accurate the content and scope of feedback information on assessment or improve his/her authority thereof.

31. The operating and applying method of the terminal try-on simulation system of claim 29, it further comprising an executes the far-end control program and enables the consumer to receive the far-end operating command from the specially authorized network users who have passed the identity authentication program, and through the far-end control program, it can remotely control the operation of the terminal try-on simulation system at the consumer's terminal in a direct and real-time manner.

32. The operating and applying method of the terminal try-on simulation system of claim 23, the article searching conditions comprising an article quick-selection condition for the consumers to quickly select at least one piece of article modelling information on the wearable article.

33. The operating and applying method of the terminal try-on simulation system of claim 23, the article quick-selection condition is selected groups composed of a temporary storage information on article selection, a shopping cart information, a next-time shopping information, an information on ordered commodities, a virtual wardrobe information, a 3D virtual article information, a demonstration shelf of virtual 3D network store, a demonstration storefront of virtual 3D network store, an information on commodities automatically recommended by server, an information on commodities recommended by experts, an information on commodities recommended by far-end customer service personnel, a commodities recommended by other network users, a commodities recommended in assessment feedback, an information on commodities recommended in fitting and matching, an information on recommending the purchase of preferential combined commodities, and an pre-combined set of wearable accessories.

34. The operating and applying method of the terminal try-on simulation system of claim 23, the article searching condition executes a recommending and sorting functions and according to the consumers' fancy and searching records, it makes commercial intelligent analysis or cross-comparison to recommend and sort commodities.

35. The operating and applying method of the terminal try-on simulation system of claim 34, the recommending and sorting function is selected groups composed of a fancy brand commodities, an attention to texture commodities, a fancy and color matching article group, a commodities in same series and pattern, an attention to pattern commodities, a commodities fitting consumers, an article searched with similar conditions, a seasonal fancy commodities, a commodities recommended by other network users through voting, a commodities matched and purchased by other consumers, a commodities matched by other consumers through voting, a commodities in national style, and a commodities with design style.

36. The operating and applying method of the terminal try-on simulation system of claim 23, it further uses a dynamic exhibition and demonstration information to reproduce on the try-on simulation system the dynamic demonstration effect pre-recorded in the said information.

37. The operating and applying method of the terminal try-on simulation system of claim 36, the dynamic exhibition and demonstration information includes at least one scripting language program, a piece of article modelling information, an action instruction information and a scene information.
